# EUROPÄISCHE PATENTSCHRIFT

(11) **EP 3 964 885 B1**
(45) Veröffentlichungstag und Bekanntmachung des Hinweises auf die Patenterteilung: **07.06.2023**
(21) Anmeldenummer: 21200829.6
(22) Anmeldetag: 28.02.2020
(51) Int. Cl.: G02C 7/08

(54) **BRILLE, VERFAHREN ZUR ANPASSUNG EINER KORREKTURWIRKUNG EINER OPHTHALMISCHEN LINSE, OPHTHALMISCHE LINSE UND VERWENDUNG EINER OPHTHALMISCHEN LINSE**
GLASSES, OPHTHALMIC LENS, METHOD OF ADJUSTING THE CORRECTION EFFECT OF AN OPHTHALMIC LENS AND USE OF OPHTHALMIC LENS
LUNETTES, PROCÉDÉ D'AJUSTEMENT D'UN EFFET CORRECTIF D'UNE LENTILLE OPHTALMIQUE, LENTILLE OPHTALMIQUE ET UTILISATION D'UNE LENTILLE OPHTALMIQUE

(30) Priorität: 01.03.2019 DE 102019105247
(43) Veröffentlichungstag der Anmeldung: 09.03.2022
(62) Teilanmeldung aus: 20707100.2
(73) Patentinhaber: Carl Zeiss AG, 73447 Oberkochen (DE)
(72) Erfinder: BÜHREN, Tobias, 89073 Ulm (DE); KEMPE, Michael, 07751 Jena (DE)
(74) Vertreter: Tautz & Schuhmacher

(56) Entgegenhaltungen:
- EP-A1- 3 223 066
- WO-A1-2014/198027
- WO-A1-2018/219828
- JP-A- 2010 139 892

## Beschreibung

Die vorliegende Erfindung betrifft eine Brille zur Anpassung einer Korrekturwirkung einer ophthalmischen Linse. Die Erfindung liegt daher auf dem Gebiet der Optik, insbesondere auf dem Gebiet von Brillengläsern und Sehhilfen.

Weltweit ist eine zunehmende Verbreitung von Myopie, d.h. von Kurzsichtigkeit, zu beobachten. Insbesondere in Asien ist ein besonders großer Anstieg der Anzahl von Menschen mit Kurzsichtigkeit festzustellen. Als Myopie bzw. Kurzsichtigkeit wird dabei eine Fehlsichtigkeit bezeichnet, bei der das Abbild eines im Unendlichen liegenden Gegenstandes bei entspannter Akkommodation des Auges in einer Ebene vor der Netzhaut entsteht und das auf die Netzhaut treffende Licht entsprechend eine unscharfe Abbildung darstellt. Oftmals ist die Myopie eine sich mit der Zeit verschlechternde Fehlsichtigkeit, indem das fehlsichtige Auge im Laufe der Zeit immer länger wird und sich die Bildebene daher immer weiter von der Netzhaut entfernt.

Die Ätiologie der Myopie gilt als multifaktoriell und die Mechanismen des fehlgeleiteten axialen Längenwachstums des Augapfels sind noch nicht vollumfänglich verstanden. Myopie gilt daher bislang als nicht heilbar oder umkehrbar. Die Korrekturen der Myopie mittels Brillengläsern oder refraktiver Hornhautchirurgie sind dabei als Symptombekämpfung anzusehen, da das fehlgeleitete axiale Längenwachstum des Augapfels nicht rückgängig gemacht wird.

Zur Kontrolle der Entwicklung von Myopie oder des Forstschreitens von Myopie sind im Stand der Technik diverse Ansätze bekannt, wie etwa die Verwendung von bifokalen Brillengläsern und Gleitsicht-Brillengläsern insbesondere für Kinder, harte, gas-durchlässige Kontaktlinsen für Kinder, orthokeratologische (Ortho-k) Kontaktlinsen, lokale Anwendungen von Medikamenten zur Kontrolle der Akkommodation, Sehtraining oder auch die Maximierung der Aufenthaltsdauer im Freien. Zwar konnten manche dieser bekannten Methoden in bestimmten Fällen das Voranschreiten der Myopie verlangsamen, jedoch vermag keine dieser bekannten Methoden einen nachweisbaren Effekt zur vollständigen Beseitigung der Myopie oder des vollständigen Stopps des Voranschreitens von Myopie zu leisten.

Abgesehen von medikamentösen Behandlungen, wie etwa mit Atropin oder Pirenzepin, die durch Nebenwirkungen besonders bei Kindern nicht unproblematisch sind, ist eine der effektivsten bekannten Methoden zur Verlangsamung des Voranschreitens der Myopie die Orthokeratologie (Ortho-k). Aufgrund der durch die Ortho-k Kontaktlinse verursachten Abflachung der Hornhaut und dem damit verbundenen Hornhautprofil, geht die vorherrschende Meinung davon aus, dass eine Änderung des peripheren retinalen Brechungsmusters den Effekt von Ortho-k Linsen auf das Voranschreiten der Myopie und das axiale Längenwachstums des Augapfels verursacht. Allerdings sind mit einer Ortho-k Behandlung auch Risiken verbunden, wie etwa mikrobielle Keratitis, Hornhautverfärbung, epitheliale Eisenablagerung, ausgeprägte fibrillare Streifen und Änderungen der biomechanischen Eigenschaften der Hornhaut. Außerdem erfordert eine erfolgversprechende Anwendung von Ortho-k Kontaktlinsen ein sehr hohes Maß an Passgenauigkeit der Kontaktlinsen, strikte Befolgung der Gebrauchs- und Reinigungsvorschriften, die regelmäßige Durchführung von Routine-Untersuchungen, und die umgehende und geeignete Behandlung des Auges bei auftretenden Komplikationen. Auch können ethische Bedenken bezüglich der Anwendung von Kontaktlinsen bei Patienten im Kindheitsalter, die über Nacht eine signifikante Verformung der Hornhaut bewirken und andauernde Effekte auf die Sauerstoffversorgung der Hornhaut haben, bestehen. Eine Untersuchung der Risiken von Orthokeratologie ist beispielsweise in der Veröffentlichung von Liu et al., Eye & Contact Lens, 42, 1, Januar 2016 zu finden.

Die Druckschrift WO 2018/219828 A1 beschreibt einen optischen Gegenstand mit zwei aktiven Linsen und einem zeitbasierten Mechanismus zur Variierung der Brechkraft der beiden aktiven Linsen.

Die Druckschrift WO 2014/198027 A1 beschreibt eine Brille zur Verbesserung der Sehkraft von Myopie- und Hyperopie-Patienten.

Die Druckschrift EP 3 223 066 A1 beschreibt eine ophthalmische Linse zur Verzögerung, Kontrolle oder Vermeidung der Entwicklung oder des Voranschreitens von Myopie.

Es ist daher die Aufgabe der Erfindung, eine Möglichkeit zur Behandlung und/oder Prävention von Myopie bereitzustellen, die die Nachteile der oben genannten Methoden nicht aufweist.

Die Erfinder haben erkannt, dass der wesentliche Mechanismus der Behandlung mit Ortho-K Kontaktlinsen dynamisch ist. Der Mechanismus wird entgegen der vorherrschenden Meinung nicht durch eine Änderung des peripheren retinalen Brechungsmusters hervorgerufen und verlangsamt so nicht das Voranschreiten der Myopie und das axiale Längenwachstum des Augapfels. Der Mechanismus wird durch die dynamische Rückverformung der Hornhaut nach Entnahme und vor Wiedereinsetzung der Ortho-K-Kontaktlinse, und der damit verbundenen rapiden Myopisierung in Form einer sich immer weiter von der Netzhaut entfernenden Bildebene, hervorgerufen. Dabei stellt der Mechanismus ein eindeutiges Signal für alle Objektebenen im dynamischen Sehen dar. Dieser Mechanismus erklärt auch, warum Ortho-K-Kontaktlinsen effektiver das axiale Längenwachstums des Augapfels verlangsamen als andere statische Korrekturmethoden, die eine Änderung des peripheren retinalen Brechungsmusters hervorrufen. Statische Korrekturmethoden sind beispielsweise Brillengläser oder Kontaktlinsen, die keine Verformung der Hornhaut bewirken sollen.

Die Erfindung betrifft eine Brille mit den Merkmalen des Anspruchs 1. Bevorzugte Ausführungsformen sind Gegenstand der nachfolgenden Beschreibung.

Die automatisierte Änderung der Korrekturwirkung der ophthalmischen Linse soll hierbei den dynamischen Mechanismus einer Ortho-K-Kontaktlinse (dynamische Rückverformung der Hornhaut), welche nach Entnahme und vor Wiedereinsetzung dieser, eine sich immer weiter von der Netzhaut entfernende Bildebene erzeugt, simulieren. Dabei unterscheidet sich diese automatisierte Änderung der Korrekturwirkung wesentlich vom Stand der Technik dahingehend, dass:
- die Geschwindigkeit der Veränderung um ein Vielfaches langsamer ist als bei änderbaren Korrekturwirkungen zur Kompensation der Presbyopie im dynamischen Sehen,
- im Gegensatz zur Vollkorrektur für jede Sehaufgabe beim Stand der Technik, eine graduell ansteigende Unterkorrektur des Fernpunktes des Auges stattfindet,
- die graduell ansteigende Unterkorrektur des Fernpunktes des Auges für jede Sehaufgabe ein gleichbleibendes Signal im Sinne von Unterkorrektur, also auch geringerer Akkomodationsaufwand im Zwischen- und Nahbereich darstellt,
- keine Anpassung der änderbareren Korrekturwirkung für eine sich ändernde Vollkorrektur stattfindet,
- die graduell ansteigende Unterkorrektur des Fernpunktes des Auges eine Verlangsamung des axialen Längenwachstums des Augapfels bewirkt.

Als Fernpunkt des Auges bezeichnet man den Endpunkt der Gesichtslinie, auf den das Auge ohne Akkommodation eingestellt ist. Er liegt beim emmetropen (normalsichtigen) Auge im Unendlichen (in der Praxis mit 6 m gleichgesetzt), beim myopen (kurzsichtigen) Auges davor und beim hyperopen dahinter.

Das dynamische Sehen umfasst den Sehbereich des Auges vom Fernpunkt über den Zwischenbereich bis hin zum Nahpunkt (Punkt der maximalen Akkomodation), also alle Sehdistanzen.

Die graduell ansteigende Unterkorrektur des Fernpunktes des Auges bewirkt eine Verlangsamung des axialen Längenwachstums des Augapfels dadurch, dass eine rapiden Myopisierung in Form einer sich immer weiter von der Netzhaut entfernenden Bildebene simuliert wird. Unter "rapid" ist hierbei ein Zeitraum bevorzugt von 30 Minuten bis 18 Stunden, weiter bevorzugt von 1 Stunde bis 17 Stunden, weiter bevorzugt von 2 Stunden bis 16 Stunden, besonders bevorzugt von 3 Stunden bis 15 Stunden und ganz besonders bevorzugt von 4 Stunden bis 14 Stunden.

Nachstehende Tabelle 1 zeigt den Vergleich einer veränderten Korrekturwirkung über einen vorgegeben Zeitraum bei Anpassung der Vollkorrektur, bei Kompensation der Presbyopie, bei realer Myopisierung bzw. Myopieprogression, bei dynamischer Rückverformung der Hornhaut nach Entnahme und vor Wiedereinsetzung der Ortho-K-Kontaktlinse mit einer ophthalmischen Linse, die eine rapiden Myopisierung in Form einer sich immer weiter von der Netzhaut entfernenden Bildebene simuliert und somit die Wirkung einer Ortho-K-Kontaklinse nachstellt:

**Tabelle 1**

| Veränderung der Korrekturwirkung | Dioptrien | Zeit | Dioptrien/Zeit |
|---|---|---|---|
| Anpassung der Vollkorrektur | ±0,25 bis ±20,0 | unmittelbar | ±0,25 bis ±20,0/1s |
| Kompensation der Presbyopie | +0,25 bis +4,0 | unmittelbar | +0,25 bis +4,0/1s |
| Myopisierung | -0,25 bis -2,0 | pro Jahr | -0,0007 bis -0,005/ 24h |
| Ortho-K-Kontaktlinse | 30% Regression, d.h. -0,25 bis -2,0 | pro 24h (abzüglich Tragezeit) | -0,25 bis -2,0/24h (abzüglich Tragezeit) |
| rapide Myopisierung durch Ortho-K-Simulation | -0,25 bis -2,0 | pro 24h (abzüglich Tragezeit) | -0,25 bis -2,0/24h (abzüglich Tragezeit) |
| rapide Myopisierung durch Ortho-K-Simulation | -0,25 bis -2,0 | 30 min bis 18h | -0,5 bis -4,0/ 30min bis -0,013 bis -0,11/18h |

Wie aus Tabelle 1 ersichtlich, liegt die rapide Myopisierung durch Ortho-K-Simulation in einem Bereich von -0,013 bis -0,11 pro 18h. In diesem Bereich ist die rapide Myopisierung durch Ortho-K-Simulation zwar deutlich höher, aber für den Brillenträger vergleichbar mit einer realen Myopisierung von -0,0007 bis - 0,005 pro 24h.

Ein wesentlicher Unterschied der erfindungsgemäßen ophthalmischen Linse, welche eine graduell ansteigende Unterkorrektur des Fernpunktes des Auges bewirkt und somit die Wirkungsweise einer Ortho-K-Kontaktlinse simuliert, zu veränderbaren Brillengläsern aus dem Stand der Technik, wie beispielsweise
WO 2017/060379 A1 oder WO 2018/215611 A1 ist, dass die ophthalmische Linse bevorzugt nur in einem ersten Zeitraum von bevorzugt weniger als 30 Minuten, weiter bevorzugt weniger als 20 Minuten eine Vollkorrektur, bevorzugt bei Nichtpresbyopen, für die Ferne, bewirkt.

Der vorbestimmte Zeitraum liegt bevorzugt in einem Bereich von 30 Minuten bis 18 Stunden, weiter bevorzugt von 1 Stunde bis 17 Stunden, weiter bevorzugt von 2 Stunden bis 16 Stunden, besonders bevorzugt von 3 Stunden bis 15 Stunden und ganz besonders bevorzugt von 4 Stunden bis 14 Stunden. Diese automatisierte Änderung der Korrekturwirkung simuliert wie bereits vorstehend beschrieben die Wirkungsweise einer Ortho-K-Kontaktlinse.

Eine ophthalmische Linse ist dabei insbesondere eine optische Linse zur Korrektur und/oder Behandlung und/oder Prävention von Fehlsichtigkeiten. Eine ophthalmische Linse kann insbesondere als Brillenglas oder als Kontaktlinse ausgebildet sein. Ein Brillenglas ist dabei vorzugsweise ein fertiges Brillenglas. Allerdings kann das Brillenglas vorzugsweise auch als Kombination eines fertigen Brillenglases mit einem Brillenglas mit einer änderbaren Korrekturwirkung vorliegen.

Die Korrekturwirkung ist dabei vorzugsweise eine refraktive und/oder diffraktive Wirkung des Brillenglases oder umfasst eine solche. Die Korrekturwirkung kann beispielsweise derart ausgebildet sein, dass diese dazu ausgelegt ist, eine Fehlsichtigkeit eines Auges bei bestimmungsgemäßer Verwendung zu korrigieren und/oder bei bestimmungsgemäßer Verwendung eine prophylaktische Wirkung auf das Auge zu haben.

Dass die Änderung der Korrekturwirkung und somit die Simulation einer Ortho-K-Kontaktlinse automatisiert erfolgt, bedeutet dabei, dass der Benutzer der ophthalmischen Linse bzw. der Träger einer Brille mit der ophthalmischen Linse die Änderung nicht selbst herbeiführen muss, beispielsweise durch ein manuelles Eingreifen, sondern dass die ophthalmische Linse und/oder die Brille die Änderung der Korrekturwirkung eigenständig vornehmen. Bevorzugt ist die ophthalmische Linse und/oder die Brille programmierbar, um die automatisierte Änderung der Korrekturwirkung personenspezifisch auf die gewünschte Weise und über den gewünschten, vorbestimmten Zeitraum vorzunehmen. Besonders bevorzugt kann die Änderung der Korrekturwirkung und/oder der vorbestimmte Zeitraum durch den Benutzer und/oder besonders geschultes Personal eingestellt bzw. vorgegeben werden.

Die Erfindung bietet den Vorteil, dass mittels der automatisierten Änderung der Korrekturwirkung eine Änderung der Kompensation der Fehlsichtigkeit und/oder eine Änderung der präventiven Maßnahme über den vorbestimmten Zeitraum erreicht werden kann, ohne dass der Benutzer die Änderung aktiv herbeiführen muss. Durch die automatisierte Änderung der Korrekturwirkung bietet die Erfindung den Vorteil, dass der gleiche oder ein ähnlicher Effekt auf das Auge, mit welchem das Brillenglas verwendet wird, herbeigeführt werden kann, wie dies mit Ortho-K-Kontaktlinsen möglich ist.

Während die durch nächtliches Tragen von Ortho-K-Kontaktlinsen herbeigeführte Verformung der Hornhaut und die Rückformung der Hornhaut in ihre ursprüngliche Form unter Tags zu einer graduellen Veränderung der refraktiven Wirkung der Hornhaut führt, kann diese graduelle refraktive Änderung erfindungsgemäß durch die automatisierte Änderung der Korrekturwirkung herbeigeführt bzw. simuliert werden. Mit anderen Worten kann mit einer erfindungsgemäßen ophthalmischen Linse ebenso eine graduelle Änderung der refraktiven Eigenschaften der Abbildung herbeigeführt werden, wie dies herkömmlicherweise durch eine Relaxation der Hornhaut nach dem nächtlichen Tragen von Ortho-K-Kontaktlinsen bewirkt wird.

Jedoch bietet die Erfindung den erheblichen Vorteil, dass für die Herbeiführung der Änderung der Korrekturwirkung über den vorbestimmten Zeitraum keine Verformung der Hornhaut, kein mechanischer Kontakt mit der Hornhaut und auch sonst keine Beeinträchtigung der Hornhaut erforderlich ist. Demnach kann mit einer erfindungsgemäßen ophthalmischen Linse der gewünschte Effekt, nämlich die graduelle, automatisierte Änderung der optischen Eigenschaften herbeigeführt werden, ohne aber die einer herkömmlichen Ortho-K Anwendung anhaftenden Nachteile für das Auge in Kauf nehmen zu müssen.

Zudem bietet die Erfindung den Vorteil, dass auch automatisierte Änderungen der Korrekturwirkung vorgenommen werden können, die sich durch eine herkömmliche Verformung der Hornhaut mittels Ortho-K-Kontaktlinsen nicht erreichen lassen. Vorzugsweise können mit einer erfindungsgemäßen ophthalmischen Linse qualitative und/oder quantitative Änderungen der Korrekturwirkung und/oder Zeiträume der Änderung bewerkstelligt werden, welche aus technischen und/oder medizinischen Gründen mit einer Verformung der Hornhaut nicht realisierbar sind. Ferner bietet die Erfindung vorzugsweise die Möglichkeit, die Änderung der Korrekturwirkung mit einer größeren Genauigkeit für die Optimierung des präventiven und/oder therapeutischen Effekts vorzunehmen, als dies mit Ortho-K Verfahren möglich ist.

Vorzugsweise ist die Änderung der Korrekturwirkung reversibel. Besonders bevorzugt ist die Änderung der Korrekturwirkung in einem weiteren vorbestimmten Zeitraum erneut durchführbar. Mit anderen Worten kann die Änderung der Korrekturwirkung vorzugsweise erneut durchgeführt werden. Gemäß einer bevorzugten Ausführungsform kann es dazu erforderlich sein, die ophthalmische Linse zunächst in ihren Ausgangszustand zurückzubringen, um die Änderung der Korrekturwirkung erneut durchführen zu können. Beispielsweise kann die automatisierte Änderung der Korrekturwirkung mit einem Energieverbrauch einhergehen, sodass eine Zufuhr von Energie erforderlich ist, bevor die Änderung der Korrekturwirkung erneut durchgeführt werden kann. Beispielsweise kann die Zufuhr von Energie eine Zufuhr von elektrischer Energie umfassen, wie etwas das Aufladen und/oder Austauschen eines Akkus und/oder einer Batterie. Gemäß einer anderen Ausführungsform kann die Zufuhr von Energie beispielsweise die Zufuhr von Wärmeenergie und/oder mechanischem Druck umfassen, beispielsweise durch die Aufbewahrung des Brillenglases in einem Wärmebad und/oder in einer Formpresse. Die Energiezufuhr findet vorzugsweise außerhalb des vorbestimmten Zeitraums statt, in welchem die Änderung der Korrekturwirkung erfolgt. Besonders bevorzugt findet die Zufuhr von Energie dann statt, wenn die ophthalmische Linse nicht in Benutzung ist. Wird die ophthalmische Linse typischerweise tagsüber benutzt, kann sich die Zufuhr der Energie während der Nachtstunden anbieten.

Der vorbestimmte Zeitraum beträgt zumindest 30 Minuten, weiter bevorzugt zumindest eine Stunde, noch weiter bevorzugt zumindest drei Stunden, am meisten bevorzugt zumindest sechs Stunden. Besonders bevorzugt wird mit der automatisierten Änderung der Korrekturwirkung die Änderung der optischen Eigenschaften simuliert, die auch eine Verformung der Hornhaut nach dem Tragen einer Ortho-K-Kontaktlinse auftritt. Jedoch sind auch andere vorbestimmte Zeiträume realisierbar. Auch kann vorzugsweise eine Änderung der Dauer des vorbestimmten Zeitraums zwischen mehreren Anwendungen des Brillenglases erfolgen. Vorzugsweise beträgt der vorbestimmte Zeitraum nicht mehr als zwei Tage, mehr bevorzugt nicht mehr als einen Tag, noch mehr bevorzugt nicht mehr als 18 Stunden, viel mehr bevorzugt nicht mehr als 15 Stunden, am meisten bevorzugt nicht mehr als zwölf Stunden. Dies kann beispielsweise dahingehend vorteilhaft sein, dass dem Auge ausreichend Zeit zur Erholung zur Verfügung steht.

Die Änderung der Korrekturwirkung erfolgt über den vorbestimmten Zeitraum graduell. Die graduelle Änderung kann vorzugsweise linear und/oder quadratisch und/oder kubisch und/oder exponentiell erfolgen. Die Änderung kann vorzugsweise monoton steigend/fallend und/oder streng monoton steigend/fallend ausgebildet sein. Dies kann beispielsweise für eine Nachbildung der Verformung bzw. Rückformung der Hornhaut nach dem Tragen einer Ortho-K-Kontaktlinse vorteilhaft sein, da auch diese graduell verläuft. Vorzugsweise dauert die automatisierte Änderung der Korrekturwirkung über den gesamten vorbestimmten Zeitraum an. Gemäß anderen bevorzugten Ausführungsformen kann die Änderung jedoch auch in mehreren Etappen bzw. Abschnitten während des vorbestimmten Zeitraums erfolgen, wobei zwischen den einzelnen Etappen bzw. Abschnitten Unterbrechungen vorliegen können. Vorzugsweise beträgt ein Maximalwert der automatisierten Änderung der Korrekturwirkung zumindest 0,1 Dioptrien, bevorzugt zumindest 0,15 Dioptrien, mehr bevorzugt zumindest 0,2 Dioptrien, am meisten bevorzugt zumindest 0,25 Dioptrien. Alternativ oder zusätzlich beträgt der Maximalwert der automatisierten Gesamtänderung der Korrekturwirkung im Tagesverlauf nicht mehr als 6 Dioptrien, bevorzugt nicht mehr als 5 Dioptrien, mehr bevorzugt nicht mehr als 4 Dioptrien, am meisten bevorzugt nicht mehr als 3 Dioptrien. Besonders bevorzugt liegt der Maximalwert der automatisierten Gesamtänderung der Korrekturwirkung im Tagesverlauf in einem Bereich von 5 - 6 Dioptrien oder in einem Bereich von 4 - 5 Dioptrien oder in einem Bereich von 3 - 4 Dioptrien oder in einem Bereich von 0,5 bis 3 Dioptrien.

Vorzugsweise sind die Korrekturwirkung und/oder die automatisierte Änderung der Korrekturwirkung zumindest teilweise sphärisch und/oder zylindrisch. Dies bietet den Vorteil, dass sich die Bildebene vorzugsweise zumindest teilweise entlang der optischen Achse verschiebt, wodurch ein positiver Effekt zur Behandlung und/oder Prävention von Myopie erzielt werden kann. Die Änderung einer zylindrischen Korrekturwirkung kann vorzugsweise eine quantitative Änderung der zylindrischen Brechkraft umfassen und/oder eine geometrische Änderung durch eine Drehung und/oder Verschiebung der Zylinderachse.

Vorzugsweise umfasst die Korrekturwirkung eine refraktive und/oder eine diffraktive Wirkung oder besteht aus einer solchen. Besonders bevorzugt umfasst die automatisierte Änderung der Korrekturwirkung eine Änderung einer refraktiven und/oder einer diffraktiven Wirkung oder besteht aus einer solchen. Beispielsweise kann die Korrekturwirkung durch eine refraktiven Brechkraft der ophthalmischen Linse verursacht werden und eine Änderung mit refraktiven und/oder diffraktiven Mitteln erreicht werden. Ebenso kann die Korrekturwirkung durch eine diffraktive Wirkung verursacht werden und eine Änderung mit refraktiven und/oder diffraktiven Mitteln erreicht werden. Auch kann die Korrekturwirkung durch diffraktive und refraktive Elemente erzeugt werden. Die diffraktiven Elemente können beispielsweise Fresnel-Linsen umfassen. Dies bietet ein hohes Maß an Flexibilität und diverse technische Möglichkeiten, um die Korrekturwirkung und/oder die Änderung der Korrekturwirkung herbeizuführen.

Vorzugsweise weist die ophthalmische Linse zusätzlich zur änderbaren Korrekturwirkung eine statische Korrekturwirkung auf. Mit anderen Worten ist gemäß manchen bevorzugten Ausführungsformen nicht die gesamte Korrekturwirkung änderbar, sondern nur ein Teil davon. Mit anderen Worten kann die Korrekturwirkung derart ausgebildet sein, dass das Minimum der geänderten Korrekturwirkung ungleich Null ist. Die Änderung der Korrekturwirkung kann bevorzugt in ihrer Qualität und/oder Quantität der statischen Korrekturwirkung gleich sein, oder voneinander verschieden. Beispielsweise kann die Änderung zu einer Verstärkung und/oder Abschwächung und/oder qualitativen Änderung der statischen Korrekturwirkung führen. Auch kann die Änderung derart erfolgen, dass zu Beginn des vorbestimmten Zeitraums die gesamte resultierende Korrekturwirkung größer ist, als am Ende des vorbestimmten Zeitraums oder umgekehrt.

Die ophthalmische Linse ist dazu ausgelegt, die Korrekturwirkung auf aktive Weise zu ändern. Eine aktive Änderung kann beispielsweise darin bestehen, dass die refraktiven und/oder diffraktiven Eigenschaften der ophthalmischen Linse gesteuert und/oder geregelt werden. Eine aktive Änderung kann beispielsweise mittels einer oder mehrerer Flüssigkristallschichten herbeigeführt werden. Die ophthalmische Linse wird als ein Brillenglas ausgebildet und weist zwei zumindest teilweise transparente Elektroden und eine zwischen den Elektroden angeordnete Flüssigkristallschicht auf, wobei das Brillenglas dazu ausgelegt ist, die Korrekturwirkung mittels der Flüssigkristallschicht automatisiert über den vorbestimmten Zeitraum zu ändern.

Eine zumindest teilweise transparente Elektrode kann beispielsweise als eine metallische, strukturierte Elektrode umfassen oder als solche ausgebildet sein. Beispielsweise kann die Elektrode eine netzartige und/oder gitterartige Struktur aufweisen und beispielsweise aus Metalldrähten ausgebildet sein. Alternativ oder zusätzlich kann eine zumindest teilweise transparente Elektrode eine geschlossene, optisch zumindest teilweise transparente, elektrisch leitfähige Schicht aufweisen oder als solche ausgebildet sein, wie etwa aus Indium-Zinn-Oxid und/oder aus Graphen.

Gemäss einer von der Erfindung nicht abgedeckten Ausführungsform weist die ophthalmische Linse bzw. das Brillenglas für die aktive Änderung der Korrekturwirkung gegeneinander verschiebbare refraktive Elemente auf, wie etwa Alvarez Linsen. Eine Verschiebung der Alvarez Linsen gegeneinander senkrecht zur optischen Achse kann beispielsweise zu einer refraktiven Anpassung der Korrekturwirkung genutzt werden. Eine weitere Möglichkeit zur aktiven Änderung der Korrekturwirkung kann vorzugsweise mittels flüssigkeitsgefüllten Linsen bzw. Brillengläsern erfolgen, wobei Flüssigkeit automatisiert in ein Reservoir im Brillenglas eingeführt oder daraus entnommen wird, um die Brechkraft des Brillenglases zu ändern. Dazu kann das Brillenglas beispielsweise transparente, flüssigkeitsdichte Membrane aufweisen, welche das Reservoir zur Aufnahme der Flüssigkeit bilden. Auch Brillengläser auf Basis von Alvarez Linsen und/oder flüssigkeitsgefüllten Linsen können vorzugsweise mit einer zusätzlichen statischen Korrekturwirkung versehen werden.

Eine passive Änderung kann beispielsweise mittels eines oder mehrerer Phasenwechselmaterialien herbeigeführt werden, die im Laufe des vorbestimmten Zeitraums zumindest teilweise ihren Brechungsindex ändern und auf diese Weise eine refraktive Änderung der Korrekturwirkung der ophthalmischen Linse bewirken. Beispielsweise kann gemäß einer bevorzugten Ausführungsform ein Phasenwechsel zumindest eines Phasenwechselmaterials von der flüssigen in die feste Phase und/oder umgekehrt genutzt werden, um dessen Brechungsindex zu ändern. Auch können im Laufe des vorbestimmten Zeitraums auf passive Weise vorzugsweise diffraktive Strukturen bereitgestellt und/oder entfernt und/oder verändert werden, um die Änderung der Korrekturwirkung herbeizuführen.

Darüber hinaus kann gemäß von der Erfindung nicht abgedeckten Ausführungsformen eine passive, automatisierte Änderung der Korrekturwirkung einer ophthalmischen Linse durch passive Formungsverfahren des optischen Materials der ophthalmischen Linse herbeigeführt werden. Dies kann beispielsweise auf eine Weise ähnlich des Ortho-k Verfahrens erfolgen, mit dem entscheidenden Unterschied, dass gemäß dieser Ausführungsformen die ophthalmische Linse, d.h. vorzugsweise ein Brillenglas oder eine Kontaktlinse, verformt wird und über den vorbestimmten Zeitraum wieder in seine ursprüngliche Form zurückkehrt, anstatt der Hornhaut des mit einem Ortho-k Verfahrens behandelten fehlsichtigen Auges. Vorzugsweise kann dabei vorgesehen sein, die ophthalmische Linse vor dem vorbestimmten Zeitraum, beispielsweise über Nacht, zu verformen, um sodann eine Änderung der Korrekturwirkung durch das Rückkehren des Brillenglases in die ursprüngliche Form zu erzielen. Dies kann beispielsweise mittels einer Pressvorrichtung erfolgen, in welche die ophthalmische Linse bzw. die Brille einzulegen ist, welche sodann die ophthalmische Linse bzw. das Brillenglas gemäß einer benutzerspezifischen bzw. individuell angepassten Pressform in die gewünschte Form bring. Der Pressvorgang kann vorzugsweise durch eine Erwärmung der ophthalmischen Linse unterstützt werden. Die Relaxation bzw. Rückkehr der ophthalmischen Linse in die ursprüngliche Form nach Entnahme aus der Pressvorrichtung hat dabei vorzugsweise eine Zeitkonstante, die der vorbestimmten Zeitdauer entspricht, wobei die Verformung vorzugsweise durch eine thermische Relaxation unterstützt werden kann. Beispielsweise kann solch eine thermische Relaxation unter einer Temperatur von etwa 40°C bis 60°C stattfinden, um etwa einen Formgedächtniseffekt von Polymermaterialien auszunutzen. Solch ein Verfahren kann vorzugsweise bei Kontaktlinsen und auch bei Brillengläsern zur Anwendung gelangen, bei welchem die Brillengläser bzw. Kontaktlinsen verformt werden. Auch kann eine statische, nichtänderbare Korrekturwirkung vorzugsweise dadurch bereitgestellt werden, dass die ophthalmischen Linse eine Kombination aus verformbarem Material und nichtverformbarem Material aufweist.

Eine Übersicht über ophthalmische Linsen mit vom Benutzer anpassbarer Brechkraft ist beispielsweise in den folgenden Veröffentlichungen zu finden, bei welchen jedoch die Anpassung der Brechkraft lediglich manuell erfolgen kann, nicht aber auf automatisierte Weise:
Ren et al., "Tunable-focus flat liquid crystal spherical lens", Applied Physics Letters 84, 23 (2004), 4789-4791.
Lin et al., "A review of electrically tunable docusing liquid crystal lenses" Transactions on Electrical and Electronic Materials 12.6 (2011), 234-240.
Barbero et al. "Adjustable-focus lenses based on the Alvarez principle" Journal of Optics 13.12 (2011) 125705.
Douali et al. "Self-optimised vision correction with adaptive spectacle lenses in developing countries" Ophthalmie and Physiological Optics 24.3 (3004): 234-241

Die Brille ist dazu ausgelegt, die jeweilige Korrekturwirkung für beide Brillengläser gleichartig und/oder verschiedenartig zu ändern. Dies bietet den Vorteil, dass beide Augen des Benutzers beim Tragen der Brille zeitgleich behandelt werden können.

Weitere Einzelheiten und Vorteile der Erfindung sollen nun anhand von in den Zeichnungen dargestellten bevorzugten Ausführungsformen näher erläutert werden.

Es zeigen:
- Fig. 1: eine Brille gemäß einer bevorzugten Ausführungsform;
- Fig. 2A und 2B: schematische Querschnittdarstellung von ophthalmischen Linsen gemäß bevorzugten Ausführungsformen;
- Fig. 3: eine Ladestation für eine Brille gemäß einer bevorzugten Ausführungsform;
- Fig. 4: eine schematische Darstellung der Brechkraft einer ophthalmischen Linse gemäß einer bevorzugten Ausführungsform;

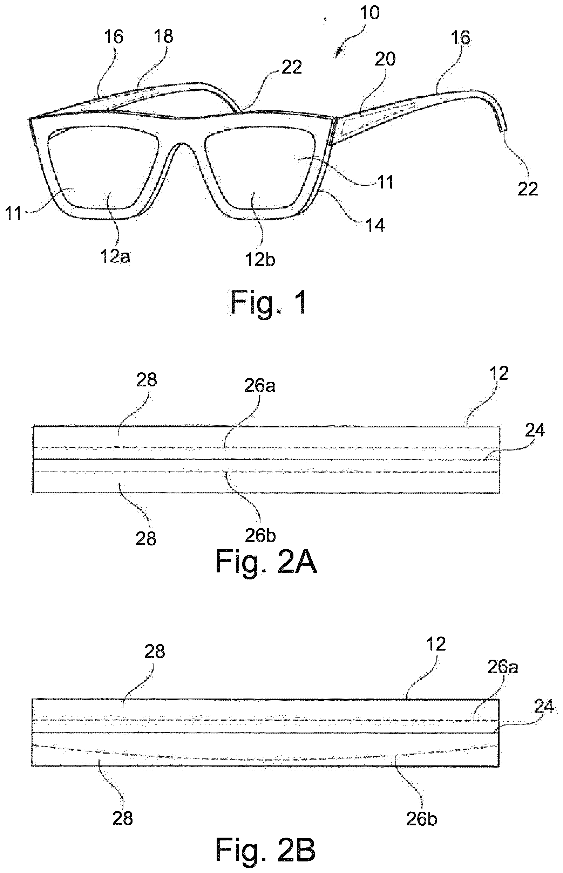

Fig. 1 zeigt in einer schematischen Darstellung eine Brille 10 gemäß einer bevorzugten Ausführungsform. Die Brille 10 weist zwei als Brillengläser 12a und 12b ausgebildete ophthalmische Linsen 11 auf, die in einer Brillenfassung 14 angeordnet sind.

Die Brille 10 ist dazu ausgelegt, die Korrekturwirkung der Brillengläser 12a und 12b über einen vorbestimmten Zeitraum automatisiert und graduell bzw. kontinuierlich zu ändern. Gemäß der bevorzugten Ausführungsform kann der vorbestimmte Zeitraum gleich einer Zeitspanne sein, in welcher der Benutzer die Brille an einem Tag typischerweise trägt, beispielsweise 15 Stunden. Die Änderung der Korrekturwirkung erfolgt gemäß der bevorzugten Ausführungsform in beiden Brillengläsern simultan, wobei die Änderung derart erfolgt, dass zu Beginn des vorbestimmten Zeitraums, beispielsweise am Morgen eines jeden Tages oder dann, wenn der Benutzer die Brille 10 aufsetzt und/oder anderweitig die Änderung aktiviert, eine vollständige Korrektur der Kurzsichtigkeit seiner Augen durch die Brillengläser 12a und 12b herbeigeführt wird. Die automatisierte Änderung der Korrekturwirkung durch die Brille 10 erfolgt über den vorbestimmten Zeitraum hinweg derart, dass eine voranschreitende Abschwächung der Korrekturwirkung vorliegt, d.h. dass zu späteren Zeitpunkten während des vorbestimmten Zeitraums, in Abhängigkeit von der bereits existierenden Fehlsichtigkeit, eine unvollständige Korrektur der Kurzsichtigkeit vorliegt bis schließlich zum Ende des vorbestimmten Zeitraums keinerlei Korrekturwirkung mehr oder nur noch eine sehr geringe durch die Brillengläser 12a, 12b bereitgestellt wird. Auf diese Weise kann mittels der Brille 10 die Kurzsichtigkeit des Benutzers behandelt werden, da sich bei regelmäßiger Anwendung, insbesondere durch das tägliche Tragen der Brille, die Augen hin zu einer geringeren Kurzsichtigkeit entwickeln beziehungsweise eine Verlangsamung des Augenwachstums, wie es bei der Ortho-k Behandlung beobachtet wird, einstellt.

Sowohl die Dauer des vorbestimmten Zeitraums als auch die Quantität der Änderung der Korrekturwirkung kann dabei an den Benutzer bzw. dessen Fehlsichtigkeit angepasst sein. Beispielsweise kann die graduelle, automatisierte Änderung der Korrekturwirkung von anfangs -2,00 Dioptrien bis hin zu -0,25 Dioptrien oder 0,00 Dioptrien am Ende des vorbestimmten Zeitraums betragen. Die Brille kann dazu ausgelegt sein, die Zeitdauer des vorbestimmten Zeitraums und/oder die Stärke der Korrekturwirkung und deren Anpassung zu ändern und/oder einzustellen.

Gemäß der gezeigten Ausführungsform weisen die Brillengläser 12a und 12b Mittel zur aktiven Änderung der Korrekturwirkung auf, welche insbesondere eine Flüssigkristallschicht 24 umfassen (siehe Figur 2).

Zur Energieversorgung und Steuerung der Flüssigkristallschicht 24 sind in den Bügeln 16 der Brille 10 eine elektronische Steuereinheit 18 ausgebildet, welche die Flüssigkristallschicht 24 entsprechend steuert, sowie ein Energiespeicher 20, beispielsweise eine Batterie und/oder ein Akku. Die Brillengläser 12a, 12b können beispielsweise über die Fassung 14 mit der Steuereinheit 18 und dem Energiespeicher 20 verkabelt sein.

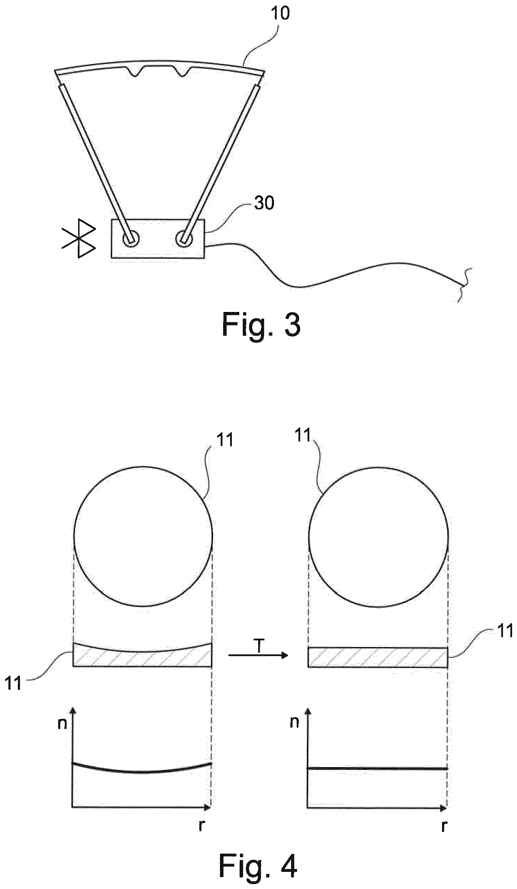

Ferner weist die Brille 10 zwei Anschlusselemente 22 auf, welche das Aufladen des Energiespeichers 20 und/oder die Kommunikation und/oder den Datenaustausch mit der Steuereinheit 18 ermöglichen. Über die Anschlusselemente 22 kann die Brille 10 beispielsweise mit einer Ladestation (siehe Figur 3) verbunden werden.

Figur 2A zeigt in einer schematischen Querschnittdarstellung eine als Brillenglas 12 ausgebildete ophthalmische Linse 11 gemäß einer bevorzugten Ausführungsform, welches Mittel zur aktiven Änderung der Korrekturwirkung aufweist. Das Brillenglas 12 weist dazu eine in das Brillenglas eingebettete Flüssigkristallschicht 24 auf, die zwischen zwei zumindest teilweise transparenten Elektroden 26a und 26b angeordnet ist. Die transparenten Elektroden 26a und 26b können beispielsweise als strukturierte Elektroden, wie etwa mit einer gitterartigen und/oder netzartigen Strukturierung, ausgebildet sein. Sowohl die Flüssigkristallschicht 24 als auch die beiden Elektroden 26a, 26b sind flächig ausgebildet und erstrecken sich über den Großteil, vorzugsweise über den gesamten nutzbaren Teil, des Brillenglases 12.

Über der oberen Elektrode 26a und unter der unteren Elektrode 26b ist vorzugsweise jeweils eine Glas- und/oder Polymerschicht 28 ausgebildet, die die Elektroden 26a, 26b und die Flüssigkristallschicht 24 stabilisieren und schützen. Über die Elektroden 26a, 26b kann die Flüssigkristallschicht gesteuert werden, um die gewünschte Änderung der Korrekturwirkung zu bewirken.

Eine weitere bevorzugte Ausführungsform eines Brillenglases 12 ist in Figur 2B gezeigt, welche weitgehend der in Figur 2A gezeigten Ausführungsform entspricht, wobei abweichend von dieser eine Elektrode 26a planar angeordnet ist, während die andere Elektrode 26b sphärisch gekrümmt ausgebildet ist, sodass diese nicht in einer Ebene parallel zur Flüssigkristallschicht 24 liegt. Dies ermöglicht, eine sphärische Korrekturänderung auf besonders einfache Weise herbeizuführen, indem die Spannung zwischen den beiden Elektroden 26a und 26b geändert wird. Gemäß anderen bevorzugten Ausführungsformen können auch beide Elektroden 26a, 26b sphärisch gekrümmt sein, wobei die Elektroden 26a, 26b voneinander abweichende Krümmungsradien aufweisen. Jedoch sind in den oben genannten Veröffentlichungen auch andere Methoden bekannt, um eine änderbare sphärische Wirkung mittels einer Flüssigkristallschicht zu erzielen.

Die Glas- und/oder Polymerschichten 28 können planar ausgebildet oder gekrümmt ausgebildet sein, um etwa eine statische Korrekturwirkung bereitzustellen. Beispielsweise kann auf diese Weise eine zusätzliche sphärische und/oder zylindrische Wirkung bereitgestellt werden, die zur automatisiert änderbaren Korrekturwirkung hinzukommt.

Figur 3 zeigt in einer schematischen Darstellung eine Brille 10, die in einer Ladehalterung 30 bzw. Docking Station 30 angeordnet ist. Dazu kann die Brille 10 mit den Bügelenden der Bügel 16 in entsprechende Ausnehmungen der Ladehalterung 30 eingesteckt sein, sodass die Anschlusselemente 22 einen elektrischen Kontakt mit entsprechenden Kontaktstellen der Ladehalterung 30 herstellen. Über den elektronischen Kontakt kann beispielsweise der Energiespeicher 20 wieder aufgeladen werden. Bevorzugt kann die Ladehalterung 30 mit der Steuereinheit 18 über die Kontaktstellen kommunizieren, um beispielsweise Informationen an die Steuereinheit 18 zu übermitteln, wie etwa Behandlungspläne und/oder Informationen zu vorbestimmten Zeiträumen und/oder durchzuführender Änderungen der Korrekturwirkung, und/oder um Informationen von der Steuereinheit 18 auszulesen, wie etwa aufgezeichnete Informationen über die Tragedauer, die Tragegewohnheiten und/oder den Zustand des Energiespeichers und/oder anderer Komponenten der Brille. Beispielsweise kann die Ladehalterung 30 mit einem Computer und/oder einem Server verbunden sein, um Informationen von diesem zu erhalten und/oder an diesen weiterzuleiten und/oder eine Kommunikation mit zwischen der Steuereinheit 18 und dem Computer und/der dem Server herzustellen.

Alternativ oder zusätzlich kann auch eine kabellose Verbindung zwischen der Steuereinheit 18 und einer Recheneinheit, bspw. einem Smartphone, hergestellt werden, wie etwa über bluetooth und/oder WiFi und/oder über Near Field Communication (NFC). Alternativ oder zusätzlich kann auch das Laden des Energiespeichers 20 kabellos über Induktion erfolgen. Dazu kann die Brille 10 vorzugsweise mit RFID Antennen ausgebildet sein. Bevorzugt sind die Brille 10 und die Ladestation 30 dazu ausgelegt, dass die Brille 10 in der Ladestation 30 angeordnet ist, wenn die Brille 10 vom Benutzer nicht getragen wird. Beispielsweise kann vorgesehen sein, die Brille 10 nachts in der Ladestation 30 anzuordnen, um den Energiespeicher 20 der Brille 10 wieder aufzuladen und/oder Daten von der Steuereinheit 18 auszulesen und/oder an die Steuereinheit zu senden.

Gemäß einer bevorzugten Ausführungsform kann es vor der ersten Benutzung der Brille 10 erforderlich sein, die Brille 10 in der Ladestation 30 anzuordnen, um die Brille 10 für den Benutzer zu konfigurieren, d.h. um die für den Benutzer spezifischen Korrekturdaten, wie etwa die Korrekturwirkung und den für den Benutzer spezifischen vorbestimmten Zeitraum, festzulegen. Die benutzerspezifischen Daten können beispielsweise auf klinischen Studien und/oder medizinischen Untersuchungen basieren. Gemäß einer bevorzugten Ausführungsform kann es erforderlich sein, die benutzerspezifischen Daten nur dann erneut an die Steuereinheit 18 zu senden, wenn deren Änderung erforderlich ist.

Figur 4 zeigt in einer schematischen Darstellung beispielhaft eine Formänderung einer ophthalmischen Linse 11 bei der passiven Änderung der Korrekturwirkung über einen Vorbestimmten Zeitraum T.

Figur 4 zeigt im oberen Bereich beispielhaft die Form der ophthalmischen Linse 11 in Draufsicht, welche eine runde Form aufweist. In der Mitte ist die ophthalmische Linse 11 in einer Querschnittsansicht gezeigt. Im unteren Bereich ist der Verlauf des Brechungsindexes n über den Durchmesser r symbolisch dargestellt, welcher eine Begleiterscheinung der Form der ophthalmischen Linse 11 darstellen kann oder in seiner optischen Wirkung der jeweils darüber dargestellten Verformung der ophthalmischen Linse 11 gleichkommen kann.

In der linken Hälfte der Figur 4 ist die Situation zu Beginn des vorbestimmten Zeitraums T dargestellt. Zu diesem Zeitpunkt weist eine Fläche der ophthalmischen Linse 11 eine konkave Krümmung auf, um eine refraktive Korrekturwirkung bereitzustellen. Unterstützend oder alternativ weist der äquivalente Brechungsindexverlauf eine konkave Form über den Durchmesser der ophthalmischen Linse 11 auf. Am Ende des vorbestimmten Zeitraums T, in welchem die automatisierte Änderung zu einer graduellen und kontinuierlichen Abnahme der Korrekturwirkung führten, ist - hier beispielhaft - keine Korrekturwirkung mehr vorhanden, sodass die ophthalmische Linse 11 eine planare Querschnittsform aufweist und unterstützend oder alternativ der äquivalente Brechungsindexverlauf n über den Durchmesser r hinweg konstant ist.

Dabei ist in Figur 4 nur der veränderliche Teil der Korrekturwirkung der ophthalmischen Linse gezeigt. Dieser kann durch eine statische Korrekturwirkung mittels einer nicht verformbaren, gekrümmten Linsenkomponente, die einer konventionellen ophthalmischen Linse entspricht, ergänzt werden. Die in Figur 4 gezeigte veränderliche Linsenkomponente kann dafür mit der statischen Linsenkomponente verkittet sein.

### Bezugszeichenliste

- 10: Brille
- 11: ophthalmische Linse
- 12, 12a, 12b: Brillenglas
- 14: Fassung
- 16: Bügel
- 18: Steuereinheit
- 20: Energiespeicher
- 22: Anschlusselement
- 24: Flüssigkristallschicht
- 26, 26a, 26b: Elektrode
- 28: Polymerschicht bzw. Glasschicht
- 30: Ladestation bzw. Dockingstation

## Patentansprüche

1. Brille (10) umfassend zwei als Brillengläser (12) ausgebildete ophthalmische Linsen (11), welche jeweils eine änderbare Korrekturwirkung aufweisen, **dadurch gekennzeichnet, dass** die Brille dazu ausgelegt ist, die Korrekturwirkung der ophthalmischen Linsen (11) automatisiert über einen vorbestimmten Zeitraum von zumindest 30 Minuten zu ändern, wobei die Änderung der jeweiligen Korrekturwirkung über den vorbestimmten Zeitraum graduell erfolgt, wobei die Brille ferner dazu ausgelegt ist, die jeweilige Korrekturwirkung für beide Brillengläser gleichartig und/oder verschiedenartig zu ändern;
wobei die ophthalmischen Linsen jeweils zumindest zwei zumindest teilweise transparente Elektroden (26a, 26b) und eine zwischen den Elektroden angeordnete Flüssigkristallschicht (24) aufweist, wobei die Brillengläser (12) dazu ausgelegt sind, die jeweilige Korrekturwirkung mittels der Flüssigkristallschicht (24) automatisiert über den vorbestimmten Zeitraum zu ändern; und
wobei die Brille (10) eine Steuereinheit 18 aufweist, welche dazu ausgelegt ist, die Flüssigkristallschicht (24) zu steuern und mit Energie zu versorgen, wobei die Steuereinheit (18) in Bügeln (16) der Brille ausgebildet ist.

## Claims

1. Pair of spectacles (10) comprising two ophthalmic lenses (11), which are embodied as spectacle lenses (12), which each have a changeable corrective effect, **characterized in that** the pair of spectacles is designed to automatically change the corrective effect of the ophthalmic lenses (11) over a predetermined period of time of at least 30 minutes, wherein the change in the respective corrective effect over the predetermined period of time is gradual, wherein the pair of spectacles is further designed to change the respective corrective effect for both spectacle lenses in the same way and/or in different ways;
wherein the ophthalmic lenses each have at least two at least partly transparent electrodes (26a, 26b) and a liquid crystal layer (24) disposed between the electrodes, wherein the spectacle lenses (12) are designed to automatically change the respective corrective effect over the predetermined period of time by means of the liquid crystal layer (24); and wherein the pair of spectacles (10) has a control unit (18) which is designed to control the liquid crystal layer (24) and to supply it with power, wherein the control unit (18) is formed in the temples (16) of the pair of spectacles.

## Revendications

1. Lunettes (10) comprenant deux lentilles ophtalmiques (11) qui sont conçues comme des verres de lunettes (12) et qui présentent chacune un effet correcteur variable, **caractérisées en ce que** les lunettes sont conçues pour modifier automatiquement l'effet correcteur des lentilles ophtalmiques (11) sur une durée prédéterminée d'au moins 30 minutes, la modification de l'effet correcteur respectif étant effectuée progressivement sur la durée prédéterminée, les lunettes étant en outre conçues pour modifier l'effet correcteur respectif de la même manière et/ou de manière différente pour les deux verres de lunettes ;
les lentilles ophtalmiques comportant chacune au moins deux électrodes au moins partiellement transparentes (26a, 26b) et une couche de cristaux liquides (24) disposée entre les électrodes,
les verres de lunettes (12) étant conçus pour modifier automatiquement l'effet correcteur respectif au moyen de la couche de cristaux liquides (24) sur la durée prédéterminée ; et
les verres (10) comportant une unité de commande 18 qui est conçue pour commander la couche de cristaux liquides (24) et l'alimenter en énergie, l'unité de commande (18) étant formée dans des branches (16) des lunettes.
